# EUROPEAN PATENT APPLICATION

(11) **EP 4 525 145 A1**
(43) Date of publication of application: **19.03.2025**
(21) Application number: 22941144.2
(22) Date of filing: 12.05.2022
(51) Int. Cl.: H01M 50/102, H01M 50/131

(54) **BATTERY AND ELECTRONIC DEVICE**

(71) Applicant: Ningde Amperex Technology Limited, Ningde, Fujian 352100 (CN)
(72) Inventor: HAO, Hui, Ningde, Fujian 352100 (CN); LIU, Ning, Ningde, Fujian 352100 (CN); YAN, Kun, Ningde, Fujian 352100 (CN); LI, Chenchen, Ningde, Fujian 352100 (CN)
(74) Representative: Icosa
(86) International application number: PCT/CN2022/092479
(87) International publication number: WO 2023/216188

(57) **Abstract**

This application discloses a battery and an electronic device. The battery includes a first housing, an electrode assembly, and a second housing hermetically connected to the first housing. An accommodation cavity is created between the first housing and the second housing to accommodate the electrode assembly. Along a first direction, the first housing possesses a first maximum length L₁, and the second housing possesses a second maximum length L₂, satisfying: 1.5 ≤ L₁/L₂ < 5. In this way, when the battery is loaded into the electronic device, the first housing can be directly used as a housing cover of the electronic device. In replacing the battery, the entire battery can be removed from the electronic device by just removing the first housing from the electronic device, thereby making the operation convenient and fast. In addition, in loading the battery into the electronic device, the original housing cover of the electronic device can be eliminated, and the first housing can be directly used as the housing cover of the electronic device. The battery can occupy more space in the electronic device, thereby increasing the energy density of the battery.

## Description

### TECHNICAL FIELD

This application relates to the technical field of energy storage, and in particular, to a battery and an electronic device.

### BACKGROUND

With the continuous development of science and technology, numerous electronic devices have been designed and manufactured, such as mobile phones and laptops. The electronic devices are typically equipped with batteries. The batteries provide energy for the electronic devices to free the devices from the constraint of power cords. Generally, a battery compartment is preset in an electronic device to facilitate the loading of a battery. In addition, the electronic device is equipped with a housing cover for covering the battery compartment.

However, a battery available on the market usually needs to be pre-bonded to the battery compartment by adhesive tape or other means, and then covered by the housing cover of the electronic device before the battery can be fixed and mounted in the electronic device. When the battery needs to be replaced, the housing cover of the electronic device has to been removed before the battery is taken out. In addition, the battery removal process is rather cumbersome. Moreover, with the continuous growth of consumer demand, electronic devices such as mobile phones and tablets are required to be made thinner and lighter, and the battery capacity is required to be increasingly larger. Therefore, how to increase the energy density of the battery in a limited space is increasingly important.

### SUMMARY

To meet the above technical requirement, some embodiments of this application provide a battery and an electronic device that are convenient to use.

The following technical solution is disclosed herein to meet the technical requirement:

A battery is disclosed, including a first housing, an electrode assembly, and a second housing hermetically connected to the first housing. An accommodation cavity is created between the first housing and the second housing to accommodate the electrode assembly. Along a first direction, the first housing possesses a first maximum length L₁, and the second housing possesses a second maximum length L₂. L₁ and L₂ satisfy: 1.5 ≤ L₁/L₂ ≤ 5.

When the first maximum length L₁ and the second maximum length L₂ satisfy the relation 1.5 ≤ L₁/L₂ ≤ 5, the maximum length of the first housing in the first direction is greater than the maximum length of the second housing in the first direction. In this way, when the battery is loaded into the electronic device, the first housing can be used as the housing cover of the electronic device. Therefore, in replacing the battery, the battery can be removed from the electronic device by just detaching the first housing of the battery from the electronic device, thereby facilitating disassembly. In addition, the original housing cover of the electronic device can be eliminated, and the battery can occupy more space in the electronic device, thereby increasing the energy density of the battery.

In some embodiments, 1.5 ≤ L₁/L₂ ≤ 3. In this way, the ratio of the maximum length L₁ of the first housing in the first direction to the maximum length L₂ of the second housing in the first direction is appropriate. The length of the electrode assembly in the first direction is not greater than the length of the second housing in the first direction, thereby reducing the probability that the maximum length L₁ of the first housing in the first direction is much greater than the length of the electrode assembly in the first direction, and increasing the energy density of the battery.

In some embodiments, along a second direction perpendicular to the first direction, the first housing possesses a first maximum width W₁, and the second housing possesses a second maximum width W₂. W₁ and W₂ satisfy: 1 ≤ W₁/W₂ ≤ 3. When this relation is satisfied, the maximum width W₁ of the first housing in the second direction is greater than or equal to the maximum width W₂ of the second housing in the second direction. In this case, the widths of the second housing and the first housing in the second direction are appropriate, thereby reducing the risk that the width of the first housing in the second direction is excessively greater than the width of the second housing in the second direction, reducing the risk that the protruding part of the first housing beyond the second housing in the second direction occupies excessive space, and increasing the energy density of the battery.

In some embodiments, W₁ and W₂ satisfy: 1 ≤ W₁/W₂ ≤ 1.5.

In some embodiments, the battery further includes an electrode post electrically connected to the electrode assembly. The electrode post is mounted on the second housing, and the electrode post extends out from the second housing.

In some embodiments, the accommodation cavity is created in the second housing, and the first housing is in a plate shape. In this way, in mounting the battery into the electronic device, the second housing can be embedded into the battery compartment of the electronic device, and the first housing can fit the surface of the electronic device, thereby ensuring the flatness of the surface of the electronic device.

In some embodiments, the accommodation cavity includes a main surface and a wall face connected to the main surface. Along the first direction, a first flange portion is formed at a peripheral edge of the wall face and extends outward, and the first flange portion is fixed and connected to the first housing. The first flange portion is disposed on the second housing, thereby producing a sufficient contact area between the second housing and the first housing to facilitate the fixation and connection between the second housing and the first housing.

In some embodiments, the electrode post extends out from the wall face along the first direction. In this way, the risk of the electrode post occupying space in the third direction can be reduced, thereby being conducive to reducing the thickness of the battery and increasing the energy density of the battery.

In some embodiments, the second housing further includes a step portion. Along the first direction, two ends of the step portion are connected to an outer edge of the wall face and the first flange portion respectively. The electrode post extends out from the step portion along a third direction. The third direction is perpendicular to both the first direction and a second direction.

The electrode post extends out from the step portion, thereby reducing the risk that the electrode post hinders the connection between the second housing and the first housing in the process of fixation and connection between the second housing and the first housing, reducing the risk that the electrode post occupies space and leads to an increase in the thickness of the battery, and increasing the energy density of the battery.

In some embodiments, along a second direction, a second flange portion is formed at a peripheral edge of the wall face and extends outward. The second flange portion is fixed and connected to the first housing. Therefore, the flange portion is disposed on the second housing to increase the contact area between the second housing and the first housing, thereby being conducive to tight connection between the second housing and the first housing, and reducing the risk of battery leakage.

In some embodiments, a detachable structure is disposed on the first housing. The detachable structure is configured to be detachably connected to an electronic device to fix the battery to the electronic device.

In some embodiments, the detachable structure is a snap-on structure or a screwing structure.

In some embodiments, the accommodation cavity is created in the first housing, and the second housing is in a plate shape. In this way, the first housing protrudes beyond the surface of the second housing in a partial region in the third direction, and the protruding part of the first housing in the third direction can be embedded into the battery compartment of the electronic device. The second housing is disposed on a surface of the first housing, the surface being away from the accommodation cavity, so that the first housing and the second housing together serve as a housing cover of the electronic device.

Further, the following technical solution is disclosed herein to meet the technical requirement:

An electronic device is disclosed, including the battery described above.

In some embodiments, a battery compartment is created in the electronic device. The accommodation cavity is disposed in the battery compartment, and the first housing serves as a rear cover of the electronic device.

The first housing directly serves as the rear cover of the electronic device, thereby eliminating the original rear cover of the electronic device and increasing the energy density of the battery. In addition, the battery can be replaced by just removing the first housing from the electronic device, making the operation convenient and fast.

In some embodiments, a snap buckle is disposed on an outer edge of the first housing, a snap hole is disposed at a position on an outer edge of the electronic device, and the position corresponds to the snap buckle; or, a snap hole is disposed on an outer edge of the first housing, a snap buckle is disposed at a position on an outer edge of the electronic device, the position corresponds to the snap hole, and the snap buckle is fastened to the snap hole to fix the battery to the electronic device. The snap buckle and the snap hole fit each other, so that the battery can be quickly mounted onto the electronic device, thereby saving the time required for assembling the battery, and making it simple and convenient to fit the battery into the electronic device.

In some embodiments, a through-hole is disposed on an outer edge of the first housing. A screw hole is disposed at a position on an outer edge of the electronic device, and the position corresponds to the through-hole. The through-hole is connected to the screw hole by a screw to fix the battery to the electronic device. In this way, to remove the battery from the electronic device, the battery can be detached from the electronic device by just unscrewing, thereby making the replacement convenient.

Some embodiments of this application achieve the following beneficial effects: The battery disclosed herein includes a first housing, an electrode assembly, and a second housing hermetically connected to the first housing. An accommodation cavity is created between the first housing and the second housing to accommodate the electrode assembly. Along a first direction, the first housing possesses a first maximum length L₁, and the second housing possesses a second maximum length L₂, satisfying: 1.5 ≤ L₁/L₂ ≤ 5. In this way, when the battery is loaded into the electronic device, the first housing can be directly used as a housing cover of the electronic device. The original housing cover of the electronic device can be eliminated. Therefore, the saved space can be used by the battery, thereby increasing the energy density of the battery. Moreover, in replacing the battery, the entire battery can be removed from the electronic device by just removing the first housing from the electronic device, thereby making the operation convenient and fast. In addition, the original housing cover of the electronic device can be eliminated, and the first housing can be directly used as the housing cover of the electronic device. The battery can occupy more space in the electronic device, thereby increasing the energy density of the battery.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a schematic structural diagram of a battery according to an embodiment of this application;
FIG. 2 is a structural exploded view of FIG. 1;
FIG. 3 is a cross-sectional view of a part of the structure shown FIG. 2;
FIG. 4 is a schematic structural diagram of an electrode assembly according to an embodiment of this application;
FIG. 5 is a schematic structural diagram of an electrode assembly according to another embodiment of this application;
FIG. 6 is a schematic diagram of a partial structure of a battery according to another embodiment of this application;
FIG. 7 is a schematic structural diagram of a battery according to another embodiment of this application;
FIG. 8 is a cross-sectional view of a part of the structure shown FIG. 6;
FIG. 9 is a schematic structural diagram of a battery according to still another embodiment of this application;
FIG. 10 is a cross-sectional view of a partial structure of a battery according to this application;
FIG. 11 is a schematic diagram of the structure in FIG. 9 viewed from another viewing angle; and
FIG. 12 is a structural exploded view of an electronic device according to an embodiment of this application.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. A direction or a positional relationship indicated by the terms such as "up", "down", "in", "out", "vertical", and "horizontal" used herein is a direction or positional relationship based on the illustration in the drawings, and is merely intended for ease or brevity of describing this application, but does not indicate or imply that the indicated device or component is necessarily located in the specified direction or constructed or operated in the specified direction. Therefore, such terms are not construed as a limitation on this application. In addition, the terms "first" and "second" are merely used for descriptive purposes, but not construed as indicating or implying relative importance.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

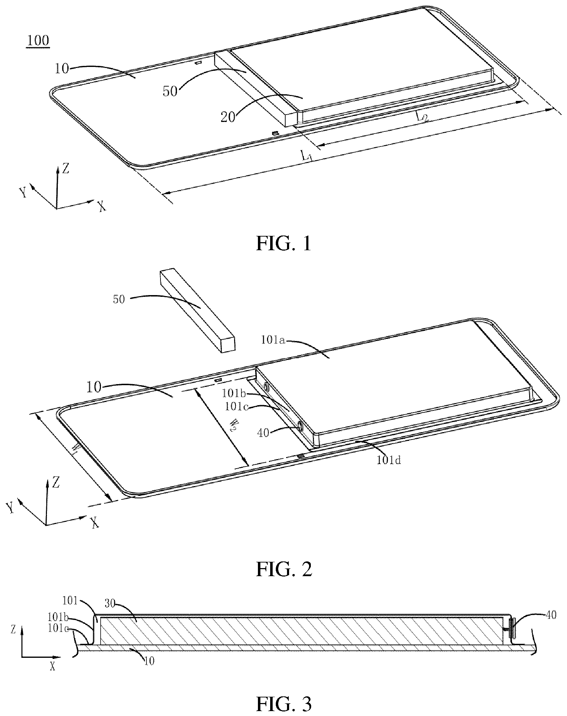

As shown in FIG. 1 to FIG. 3, a battery 100 disclosed in an embodiment of this application includes a first housing 10, a second housing 20, and an electrode assembly 30. The first housing 10 is hermetically connected to the second housing 20, so that an accommodation cavity 101 is created between the first housing 10 and the second housing 20. The electrode assembly 30 is accommodated in the accommodation cavity 101. Along a first direction X, the first housing 10 possesses a first maximum length L₁, and the second housing 20 possesses a second maximum length L₂, satisfying: 1.5 ≤ L₁/L₂ ≤ 5. In other words, the maximum length L₁ of the first housing 10 in the first direction X is greater than the maximum length L₂ of the second housing 20 in the first direction X. In some embodiments, specifically, the L₁/L₂ ratio may be any one of 1.5, 2, 2.5, 3, 3.5, 4, 4.5, or 5, or any value between 1.5 and 5 that is not enumerated herein.

The first housing 10 further includes other parts in addition to the region connected to the second housing 20. The part of the first housing 10 in excess of the second housing 20 may be configured to cover other components of the electronic device, thereby acting as a partial housing of the electronic device to protect the electrical components of the electronic device. In this way, to replace the battery 100 in the electronic device, the battery can be removed by just removing the housing, thereby making the operation convenient. Moreover, when the first housing 10 of the battery 100 acts as the housing of the electronic device, the original housing of the electronic device can be eliminated. For example, when the battery 100 in an embodiment of this application is applied to a mobile phone, the first housing 10 can be used as a housing cover of the mobile phone, and the original housing of the mobile phone can be eliminated, thereby increasing the space of the battery compartment of the mobile phone. The battery can occupy more space without changing the thickness of the mobile phone, thereby increasing the energy density of the battery 100.

Further, the first housing 10 and the second housing 20 in the first direction X further satisfy: 1.5 ≤ L₁/L₂ ≤ 3.

In some embodiments, along a second direction Y perpendicular to the first direction X, the first housing 10 possesses a first maximum width W₁, and the second housing 20 possesses a second maximum width W₂, satisfying: 1 ≤ W₁/W₂ ≤ 3. As an example, when W₁/W₂ = 1, the first housing 10 and the second housing 20 possess the same width in the second direction Y; when W₁/W₂ = 3, the width of the first housing 10 in the second direction Y is greater than the width of the second housing 20 in the second direction Y. In some embodiments, specifically, the W₁/W₂ ratio may be any one of 1.5, 2, 2.5, 3, or any value between 1.5 and 3 that is not enumerated herein. In some other embodiments, 1 ≤ W₁/W₂ ≤ 1.5.

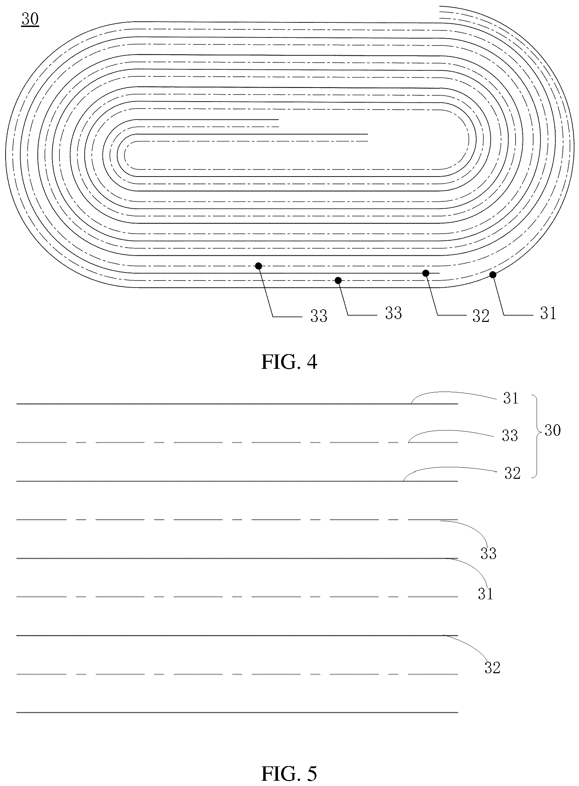

In some embodiments, the electrode assembly 30 includes a first electrode plate 31, a second electrode plate 32, and a separator 33. The separator 33 is disposed between the first electrode plate 31 and the second electrode plate 32. The separator 33 is configured to reduce the risk of a short-circuit between the first electrode plate 31 and the second electrode plate 32. In one case, as shown in FIG. 4, the electrode assembly 30 assumes a jelly-roll structure. In this structure, the first electrode plate 31, the separator 33, and the second electrode plate 32 are stacked and wound. In another case, as shown in FIG. 5, the electrode assembly 30 assumes a stacked structure. In this structure, the first electrode plate 31, the separator 33, and the second electrode plate 32 are stacked.

In some embodiments, referring to FIG. 2 and FIG. 3, the battery 100 includes an electrode post 40 and a protection circuit module 50. The electrode post 40 is mounted on the second housing 20. The electrode post 40 is connected to the electrode assembly 30. The electrode post 40 is connected to the protection circuit module 50. The protection circuit module 50 is configured to control the charging and discharging of the electrode assembly 30.

In some embodiments, the accommodation cavity 101 includes a main surface 101a and a wall face 101b connected to the main surface 101a. Along the first direction X, the peripheral edge of the wall face 101b extends outward to form a first flange portion 101c. The first flange portion 101c is fixed and connected to the first housing 10, so that the second housing 20 is tightly connected to the first housing 10 through the first flange portion 101c, thereby improving the hermeticity of the battery 100. Understandably, the first flange portion 101c is connected to the first housing 10 by means including but not limited to laser welding. The connection manner is not limited, as long as the first flange portion 101c can be tightly connected to the first housing 10. In these embodiments, the electrode post 40 is mounted on the wall face 101b, and the electrode post 40 extends out of the wall face 101b along the first direction X, so that the electrode post 40 is connected to the protection circuit module 50. In this embodiment, the protection circuit module 50 is disposed on the first flange portion 101c along the third direction Z. This can reduce the space occupied by the protection circuit module 50. It is hereby noted that the third direction Z is a direction perpendicular to both the first direction X and the second direction Y.

Further, along the second direction Y, a second flange portion 101d is formed at a peripheral edge of the wall face 101b and extends outward. The second flange portion 101d is fixed and connected to the first housing 10. In this way, the second housing 20 is more tightly connected to the first housing 10, thereby improving hermeticity between the first housing 10 and the second housing 20.

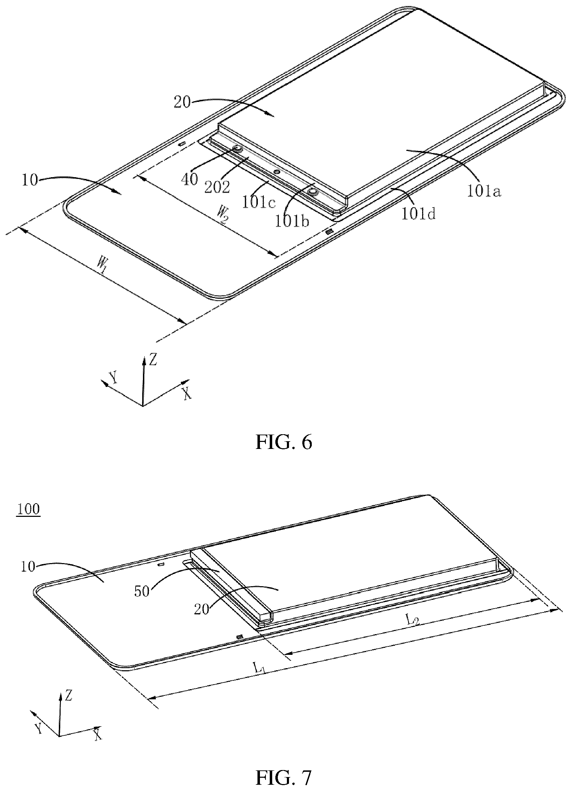

In some embodiments, with reference to FIG. 5 to FIG. 7, the second housing 20 further includes a step portion 202. Along the first direction X, two ends of the step portion 202 are connected to an outer edge of the wall face 101b and the first flange portion 101c respectively. In this embodiment, the electrode post 40 is mounted on the step portion 202, and protrudes beyond the step portion 202 along the third direction Z. This can reduce the risk that the electrode post 40 hinders the connection between the second housing and the first housing in the process of fixation and connection between the second housing 20 and the first housing 10. For example, if the electrode post 40 directly extends out of the second housing 20 from the wall face 101b, in a process of welding the first flange portion 101c to the first housing 10, the electrode post 40 protruding beyond the wall face 101b blocks the laser beam, thereby interfering with the connection between the first flange portion 101c and the first housing 10. In this application, the electrode post 40 vertically protrudes beyond the step portion 202 along the third direction Z, thereby reserving enough space for welding between the first flange portion 101c and the first housing 10.

Further, the protection circuit module 50 is disposed on the surface of the step portion 202 along the third direction Z, and the electrode post 40 is connected to the protection circuit module 50. This can reduce the space occupied by the protection circuit module 50 on the first housing 10, and increase the energy density of the battery 100.

Understandably, in some embodiments, the accommodation cavity 101 may be created in the second housing 20, and the first housing 10 is in a plate shape, as shown in FIG. 1 to FIG. 3, FIG. 6, and FIG. 7. In this case, the battery 100 is applicable to an electronic device in which a battery compartment is created beforehand. When the battery 100 is mounted into the battery compartment of the electronic device, the battery compartment is embedded in the second housing 20, thereby keeping flatness of the surface of the electronic product.

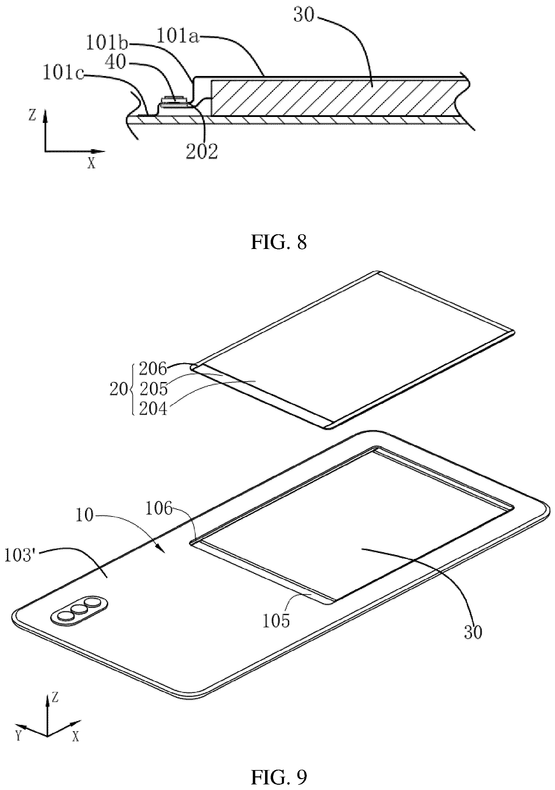

In some other embodiments, as shown in FIG. 9 to FIG. 11, the accommodation cavity 101 is created in the first housing 10, and the second housing 20 is in a plate shape. In this case, the first housing 10 protrudes beyond the second housing 20. Specifically, as shown in FIG. 9, the second housing 20 is disposed on the first surface 103' of the first housing 10. The first surface 103' of the first housing 10 is partially recessed away from the second housing 20 along the third direction Z, so that an accommodation cavity 101 is created between the first housing 10 and the second housing 20. The accommodation cavity 101 is configured to accommodate the electrode assembly 30.

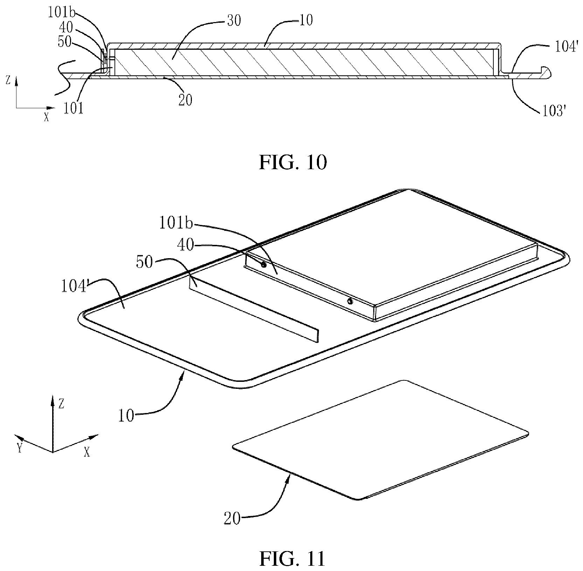

Further, as shown in FIG. 11, the first surface 103' of the first housing 10 is partially recessed to a preset depth along the third direction Z to form a first recess 105. The first recess 105 is disposed at an edge of the accommodation cavity 101 along the first direction X. In this embodiment, there are two first recesses 105. The two first recesses 105 are disposed at the edges of the accommodation cavity 101 on two sides along the first direction X respectively.

The second housing 20 includes a plate 204. A third flange portion 205 formed by extending the plate 204 along the first direction X is disposed on the second housing 20. The third flange portion 205 is configured to abut the first recess 105. The third flange portion 205 is tightly connected to the first recess 105, so as to implement a tight connection between the second housing 20 and the first housing 10. Understandably, using the first surface 103' of the first housing 10 as a reference surface, the depth of the first recess 105 in the third direction Z is greater than or equal to the thickness of the third flange portion 205, so that the second housing 20 can be accommodated in the first housing 10 conveniently when the second housing 20 is mounted on the first housing 10, thereby keeping flatness of the first surface 103'. There are two third flange portions 205. The two third flange portions 205 are located at two ends of the second housing 20 along the first direction X. One third flange portion 205 abuts one first recess 205 correspondingly. Understandably, the first recess 105 may be hermetically connected to the third flange portion 205 by means including but not limited to laser welding, and any connection manner is appropriate as long as the first recess 105 can be hermetically connected to the third flange portion 205.

In some embodiments, the electrode post 40 is vertically mounted on the wall face 101b of the accommodation cavity 101 along the first direction X. The electrode post 40 is connected to the electrode assembly 30. The protection circuit module 50 is mounted on the wall face 101b of the accommodation cavity 101, and is connected to the electrode post 40, thereby making it convenient to utilize the space occupied by the protruding part of the first housing 10 beyond the first surface 103', making the structure of the battery 100 compact, and increasing the energy density of the battery 100. In some embodiments, the dimension of the protection circuit module 50 in the third direction Z is less than or equal to the height of the wall face 101b of the accommodation cavity 101, thereby reducing the risk that the protection circuit module 50 bumps the battery compartment when the battery 100 is mounted into the electronic device.

In another embodiment, the electrode post 40 is mounted in the first recess 105, and protrudes beyond the second surface 104' of the first housing 10 along the third direction Z. The second surface 104' and the first surface 103' are two surfaces of the first housing 10 that are disposed opposite to each other along the third direction Z. The protection circuit module 50 is disposed on the second surface 104', and the electrode post 40 is connected to the protection circuit module 50. In other words, the electrode post 40 is vertically mounted in the first recess 105 of the first housing 10 along the third direction Z. The electrode post 40 is partially exposed on the second surface 104' of the first housing 10, so as to be connected to the protection circuit module 50.

In some embodiments, still referring to FIG. 10 and FIG. 11, the first surface 103' of the first housing 10 is partially recessed to a preset depth along the third direction Z to form a second recess 106. The second recess 106 is disposed at an edge of the accommodation cavity 101 along the second direction Y. In this embodiment, there are two second recesses 106. The two second recesses 106 are disposed at the edges of the accommodation cavity 101 on two sides along the second direction Y respectively. A fourth flange portion 206 formed by extending the plate 204 along the second direction Y is disposed on the second housing 20. The fourth flange portion 206 is configured to abut the second recess 106. The fourth flange portion 206 is tightly connected to the second recess 106, so as to implement a tight connection between the second housing 20 and the first housing 10. Understandably, the two third flange portions 205 and the two fourth flange portions 206 working together can implement a tighter connection between the first housing 10 and the second housing 20, and reduce the risk of leakage of the battery 100. Understandably, when the battery 100 of this application is applied to an electronic device, the protruding part of the first housing 10 that protrudes beyond the first surface 103' along the third direction Z can be accommodated in the battery compartment of the electronic device. The second housing 20 is disposed away from the battery compartment. The second housing 20 and the first housing 10 together serve as a housing cover of the electronic device. The original housing cover of the electronic device can be eliminated. The saved space can be directly utilized by the battery 100, thereby increasing the energy density of the battery.

In some embodiments, a detachable structure is disposed on the first housing 10. The detachable structure is configured to be detachably connected to an electronic device to fix and mount the battery 100 to the electronic device. The detachable structure includes a snap-on structure or a screwing structure. As an example, if a connecting hole is created on the first housing 10, a threaded hole needs to be created on the electronic device accordingly. A connecting piece such as a screw or bolt passes through the connecting hole on the first housing 10 and is then screwed to the threaded hole, so that the first housing 10 is fixed and connected to the electronic device. For another example, a snap buckle is disposed on an outer edge of the first housing 10, a snap hole is disposed at a position on an outer edge of the electronic device, and the position corresponds to the snap buckle. The snap buckle is fastened to the snap hole to fix the battery 100 to the electronic device.

The battery 100 disclosed in an embodiment of this application includes a first housing 10, a second housing 20, and an electrode assembly 30. The first housing 10 is hermetically connected to the second housing 20, so that an accommodation cavity 101 is created between the first housing 10 and the second housing 20. The electrode assembly 30 is accommodated in the accommodation cavity 101. Along a first direction X, the first housing 10 possesses a first maximum length L₁, and the second housing 20 possesses a second maximum length L₂, satisfying: 1.5 ≤ L₁/L₂ ≤ 5. In this way, the length of the first housing 10 in the first direction X is greater than the length of the second housing 20, so that the first housing 10 can be used to replace the housing of the electronic device. When the battery 100 needs to be replaced, the battery 100 can be removed from the electronic device by just removing the first housing 10 from the electronic device, thereby making the operation convenient and fast. In addition, the battery 100 can occupy more space in the electronic device, thereby increasing the energy density of the battery 100.

An electronic device 300 disclosed in another embodiment of this application includes the battery 100 disclosed in the above embodiment. The electronic device of this application is not particularly limited, and may be any electronic device known in the prior art. The electronic device 300 may be a portable electronic device such as a mobile phone, a tablet computer, or a wireless speaker, or may be a laptop computer, portable phone, portable fax machine, portable photocopier, portable printer, stereo headset, video recorder, liquid crystal display television set, handheld cleaner, portable CD player, mini CD-ROM, transceiver, electronic notepad, calculator, or the like.

In order to facilitate understanding of the structure between the electronic device and the battery 100, the following describes the electronic device in detail by using an example in which the electronic device is a mobile phone. Although the shape of the electronic device 300 shown in FIG. 9 is a mobile phone, the electronic device 300 is not limited to a mobile phone. The details are as follows:

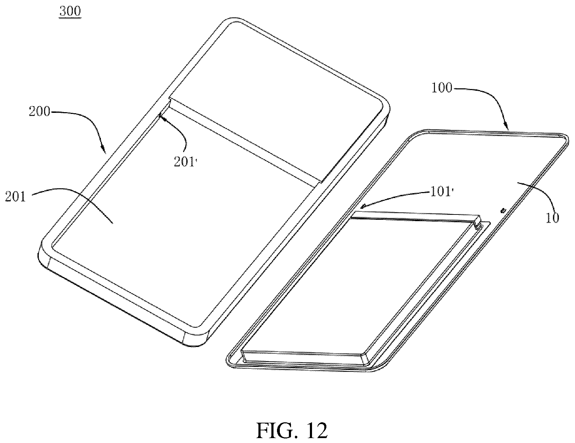

As shown in FIG. 12, the electronic device 300 includes a device body 200 and a battery 100. The device body 200 includes a battery compartment 201. When the battery 100 is mounted into the battery compartment 201, the accommodation cavity 101 is disposed in the battery compartment 201, and the first housing 10 serves as the rear cover of the electronic device 300. In this way, the electronic device 300 can directly use the first housing 10 of the battery 100 as the rear cover, thereby eliminating the original rear cover, and saving the space occupied by the original rear cover.

In some embodiments, the electronic device 300 is connected to the battery 100 through a detachable structure. For example, in one case, a snap buckle 101' is disposed on the outer edge of the first housing 10. A snap hole 201' is disposed on the device body 200. The snap buckle 101' is fastened to the snap hole 201', thereby fixing the battery 100 to the device body 200. Similarly, a snap hole 201' may be disposed on the outer edge of the first housing 10, and a snap buckle 101' may be disposed on the device body 200.

In another case, a through-hole (not shown in the drawing) is disposed on the outer edge of the first housing 10. A screw hole is disposed at a position on an outer edge of the device body 200, and the position corresponds to the through-hole. A connecting piece such as a screw passes through the through-hole, and is threadedly connected to the screw hole to fix the battery 100 to the device body 200.

In still another case, a protruding block (not shown) is disposed on the outer edge of the first housing 10. A slide slot is disposed on the outer edge of the device body 200. The slide slot includes a locking position and an unlocking position. When the first housing 10 is mounted onto the device body 200, the protruding block is located in the slide slot. The first housing 10 can slide relative to the device body 200, thereby enabling the protruding block to move in the slide slot. When the slide block moves to the locking position of the slide slot, the first housing 10 and the device body 200 are locked with each other, so that the battery 100 is fixed to the device body 200. When the slide block moves to the unlocking position of the slide slot, the first housing 10 can be separated from the device body 200, so as to facilitate the operation of replacing the battery 100.

Understandably, another detachable structure different from the detachable structure described above may be used between the device body 200 and the first housing 10, as long as a detachable connection can be implemented between the device body 200 and the first housing 10.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. A battery, comprising a first housing, an electrode assembly, and a second housing hermetically connected to the first housing, wherein an accommodation cavity is created between the first housing and the second housing to accommodate the electrode assembly; and
along a first direction, the first housing possesses a first maximum length L₁, and the second housing possesses a second maximum length L₂,
**characterized in that** 1.5 ≤ L₁/L₂ ≤ 5.

2. The battery according to claim 1, **characterized in that** 1.5 ≤ L₁/L₂ ≤ 3.

3. The battery according to claim 1, **characterized in that**, along a second direction perpendicular to the first direction, the first housing possesses a first maximum width W₁, and the second housing possesses a second maximum width W₂, satisfying: 1 ≤ W₁/W₂ ≤ 3.

4. The battery according to claim 1, **characterized in that** the battery further comprises an electrode post electrically connected to the electrode assembly, and the electrode post is mounted on the second housing and extends out from the second housing.

5. The battery according to claim 4, **characterized in that** the accommodation cavity is created in the second housing, and the first housing is in a plate shape.

6. The battery according to claim 5, **characterized in that**, the accommodation cavity comprises a main surface and a wall face connected to the main surface, and, along the first direction, a first flange portion is formed at a peripheral edge of the wall face and extends outward, and the first flange portion is fixed and connected to the first housing.

7. The battery according to claim 6, **characterized in that** the electrode post extends out from the wall face along the first direction.

8. The battery according to claim 6, **characterized in that** the second housing further comprises a step portion; along the first direction, two ends of the step portion are connected to an outer edge of the wall face and the first flange portion respectively; the electrode post extends out from the step portion along a third direction; and the third direction is perpendicular to both the first direction and a second direction.

9. The battery according to claim 6 or 8, **characterized in that**, along a second direction, a second flange portion is formed at a peripheral edge of the wall face and extends outward, and the second flange portion is fixed and connected to the first housing.

10. The battery according to claim 1, **characterized in that** a detachable structure is disposed on the first housing, and the detachable structure is configured to be detachably connected to an electronic device to fix the battery to the electronic device.

11. The battery according to claim 10, **characterized in that** the detachable structure is a snap-on structure or a screwing structure.

12. The battery according to claim 1, **characterized in that** the accommodation cavity is created in the first housing, and the second housing is in a plate shape.

13. An electronic device, comprising the battery according to any one of claims 1 to 12.

14. The electronic device according to claim 13, **characterized in that** a battery compartment is created in the electronic device, the accommodation cavity is disposed in the battery compartment, and the first housing serves as a rear cover of the electronic device.

15. The electronic device according to claim 14, **characterized in that** a snap buckle is disposed on an outer edge of the first housing, a snap hole is disposed at a position on an outer edge of the electronic device, and the position corresponds to the snap buckle; or
a snap hole is disposed on an outer edge of the first housing, a snap buckle is disposed at a position on an outer edge of the electronic device, the position corresponds to the snap hole, and the snap buckle is fastened to the snap hole to fix the battery to the electronic device.

16. The electronic device according to claim 14, **characterized in that** a through-hole is disposed on an outer edge of the first housing, a screw hole is disposed at a position on an outer edge of the electronic device, the position corresponds to the through-hole, and the through-hole is connected to the screw hole by a screw to fix the battery to the electronic device.
